Europäisches Patentamt

European Patent Office

Office européen des brevets

(19)

(11) Publication number: **0 069 812**
**B1**

(12)                    **EUROPEAN  PATENT  SPECIFICATION**

(45) Date of publication of patent specification: **14.05.86**

(51) Int. Cl.⁴: **G 01 R 29/08**

(21) Application number: **81303150.7**

(22) Date of filing: **10.07.81**

(54) **Radiometric system.**

(43) Date of publication of application:
**19.01.83 Bulletin 83/03**

(45) Publication of the grant of the patent:
**14.05.86 Bulletin 86/20**

(84) Designated Contracting States:
**DE FR GB**

(56) References cited:
**GB-A-1 406 514**
**GB-A-2 010 494**
**US-A-3 599 207**
**US-A-3 628 151**
**US-A-3 713 149**
**US-A-3 777 270**
**US-A-3 921 169**

(73) Proprietor: **SPERRY CORPORATION**
**1290, Avenue of the Americas**
**New York, N.Y. 10019 (US)**

(72) Inventor: **Lazarchik, Robert Edward**
**215 Crestwood Lane**
**Largo Florida 33540 (US)**
Inventor: **Roeder, Robert Sevier**
**1242 Nelson Street**
**Dunedin Florida 33528 (US)**

(74) Representative: **Singleton, Jeffrey**
**ERIC POTTER & CLARKSON 27 South Street**
**Reading Berkshire, RG1 4QU (GB)**

Courier Press, Leamington Spa, England.

# Description

The invention pertains to the art of high frequency radiometry using comparison of the amplitude of a signal to be investigated, such as a thermal or other noise signal, to the amplitude of a locally generated reference signal. In this type of radiometer receiver, and amplitude detector is connected alternately and cyclically through a receiver to an antenna and then to a local reference signal generator.

The comparison type of radiometer receiver has been the most widely used for the study of relatively low-level noise-like radio frequency signals, especially where the amplitudes of the noise signals to be examined are often small in comparison to the internally generated noise level within the radiometer receiver. Comparison radiometer systems achieve substantial cancellation of the receiver background noise and self-noise permitting relatively accurate measurements of low-level radio frequency signals.

While there are other types of comparison radiometers, one popular type of radiometer particularly for use in the high frequency or microwave frequency bands (such as disclosed in GB—A—1,406,514) is that in which an incoming signal to be investigated and a standard or calibrated reference noise signal are compared. The method employed consists essentially of the comparison of an unknown noise signal amplitude coming from the source to be examined with a known amplitude noise signal from a calibrated source, and the method can be used to measure the effective temperature of an unknown source with considerable accuracy. In such instruments, the receiver input may be switched between the antenna and the local reference signal generator at a relatively high rate, and the detected and amplified receiver output is coupled to a phase sensing detector operated in synchronism with the switching rate. The final unidirectional output signal from such a radiometer receiver is proportional to the difference between the temperature of the reference signal source and the temperature of the source viewed by the antenna, since the phase sensing detector acts automatically to subtract the receiver background or internal noise.

U.S.—A—3,713,149 discloses a pulse repetition frequency Doppler radar system comprising a frequency-phase locked interrogator and a transponder radar.

Passive radiometric systems, including those of the above described kind, have distinct advantages in that they are passive although that of GB—A—1,406,514 has an active mode and therefore do not interfere with the operation of other radio equipment; they also operate with utility in most types of weather, are simple and reliable, and are relatively inexpensive. However, the performance of such prior art radiometric systems with respect to targets at relatively great ranges has been less than fully satisfactory because of the limited basic radiometric temperature contrast between such selected targets and their spatial background. Furthermore, there is a significantly increasing dilution effect at large target distances because of the constant angular width receptivity pattern of antennas normally employed in radiometer systems (i.e. as distance increases, the radiometer antenna collects proportionally more spatial background noise with respect to signals received directly from the selected target).

According to the present invention there is provided a radiometric system comprising cyclic signal generating circuit means operable to supply a first cyclic signal, first noise source means operable in response to the first cyclic signal to produce a cyclic noise signal which is to be transmitted, receiver means operable to receive a reflection signal representing reflections of the transmitted cyclic noise signal from a reflecting element, signal envelope detector means for providing output signals representative of received signal envelopes, and first phase detector means responsive to the output signal of the envelope detector means in producing a signal having an amplitude related to the amplitude of the received cyclic noise signal, characterised in that the cyclic signal generating circuit means are also operable to supply a second cyclic signal in substantially phase quadrature with the first cyclic signal, in that the first phase detector means is also responsive to the first cyclic signal, in that the system comprises a second phase detector means which is responsive to the second cyclic signal and to the output signal of the envelope detector means and producing a voltage signal acting as a frequency control signal, and in that the system further comprises means for applying the frequency control signal to the cyclic signal generating circuit means for the control of the operating frequency of the cyclic signal generating circuit means.

The present invention thus provided an improved radiometric system having means for detecting targets at relatively great distances and for accurately performing radiometric measurements thereupon.

In the preferred embodiment of the present invention, signals such as target signals to be investigated are received by a suitable antenna and are compared with reference signals provided by a reference signal generator. Normally, the signals being compared are broad band or white noise signals. A high frequency switching device operated at a controllable rate cyclically and repeatedly applies the received and reference signals within the intermediate frequency section of the radiometer receiver. The output of the detector of the radiometer receiver is an alternating signal having a strong component at the same frequency as the controllable frequency at which the high frequency switch is operated. The alternating component is applied through a suitable amplifier to a phase sensitive detector, thence to a signal integrator circuit and for a display on a direct current meter calibrated in terms of temperature.

The radiometric system may be operated in a substantially conventional manner as a passive radiometric system or may be used in a second mode providing cyclic transmissions of broad band, incoherent noise signals for illumination of a remote target under examination. The broad band noise power is cyclically transmitted, being directed by the radiometer antenna to the selected target. The receiver comparison system and the noise illumination system are synchronously actuated under control of a phase locking loop so that optimum comparison is achieved independent of the actual distance to the selected target. Thus a fundamental limitation of prior art comparison radiometers is overcome, i.e. the limited temperature contrast to the usual target with respect to its spatial background. The aforementioned dilution effect characteristic of conventional radiometric antennas is essentially circumvented.

A radiometric system in accordance with the present invention will now be described in greater detail, by way of example, with reference to the accompanying drawings, in which:—

Figure 1 is a block diagram of the radiometric system showing its components and their electrical interconnections.

Figure 2 is a series of wave form graphs useful in explaining the operation of the system of Figure 1, and

Figure 3 is a graph useful in explaining the operation of a phase locking loop of the system of Figure 1.

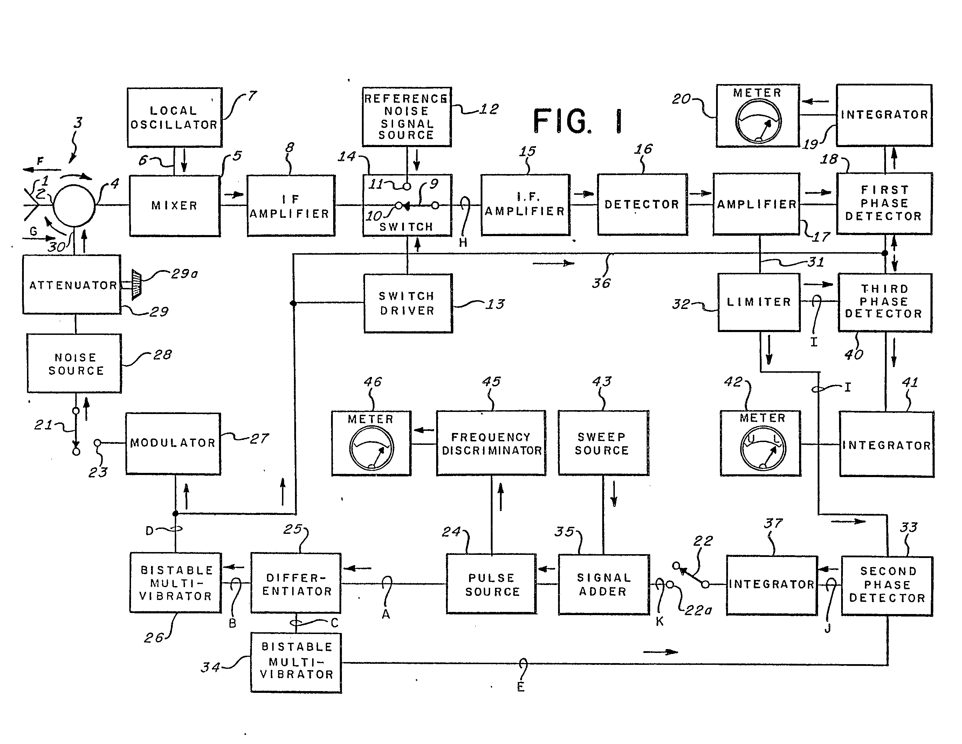

While shown in block diagram form in Figure 1, it will be seen that the invention is useful over a wide spectrum of radio frequncies, and that it is of particular merit for use in the high frequency or microwave bands, including those of the ultra high frequency region or higher. It will be understood that the invention is useful in the type of radiometer known in the art as the comparison radiometer. In the usual comparison radiometer, the radiometer receiver is cyclically switched from a receiving antenna to a reference noise signal source.

The invention will be discussed herein in operation in a type of comparison radiometer receiver in which an electronically actuated intermediate frequency switch first connects incoming down-converted signals collected by an antenna to the radio receiver, and then connects instead a reference or broad band or white noise intermediate frequency source to the receiver. Cyclic repetition of this switching process is conventionally employed in the microwave section in certain prior art radiometer concepts. It will be understood that the invention may be employed in a variety of kinds of radiometric systems. For purposes of simplifying the explanation of the invention, however, it is selected to describe its structure and operation in an electronically switched radiometric system.

In Figure 1, signals G such as, for instance, low-power noise-like radio frequency signals commonly associated with thermal or cosmic radiation generated or reflected by any source to be examined by the radiometer, are received by an antenna 1, which antenna may be any of various known types of broad band microwave or other antennas previously used in the radiometer art. The antenna accepts all signals falling within its pass band and supplies them to a port 2 of a high frequency signal circulator 3 of conventional type having a second port 4 coupled to a conventional mixer 5. The mixer 5 has a second input transmission line 6 to which is coupled an output of a continuous wave local oscillator 7. The local oscillator 7 supplies high frequency signals in the usual manner to the mixer 5, causing mixing of the two input signals for generating a modulated difference frequency signal in the intermediate frequency spectrum for application to a broad band intermediate frequency amplifier or preamplifier 8.

The frequency converted output signal generated by the mixer or converter 5 is subjected to moderate amplification in the intermediate frequency amplifier 8, as required, and is then applied to a terminal or pole 10 of a cyclically operated switch 14. An opposite pole 11 of the switch 14 is supplied with the output signal from a reference noise signal or generator 12. The effective blade 9 of the switch 14 is coupled to supply a signal or wave H to a second intermediate frequency amplifier 15 for amplification of the signal H.

It will be recognized by those skilled in the radiometer art that the switching operation performed by the switch 14 may be accomplished prior to signal mixing in the mixer 5, if desired, and that other suitable combinations of mixing, amplification, radiometric switching, and reference noise generation well understood in the art may be used. The reference noise source 12 may be either a temperature controlled transmission line load or a semiconductor noise source preferably set at approximately the temperature level of the background noise seen by the antenna 1. The reference noise source 12 may be located in a conventional manner in a coaxial transmission line coupled to the switch 14, for example.

The switch 14 may be a known low-noise, high frequency signal transmission switch, as it functions cyclically and alternately to connect the antenna 1 or the first reference noise signal source 12 to the amplifier 15 serving as the input of the remaining elements of the radiometer receiver. The switch 14 might, for instance, be a conventional ferrimagnetic or semiconductor or other intermediate frequency switch whose state is cyclically changed electronically by a driver 13. The switch 14 may, for instance, be a known type of p-i-n diode switch operating in a coaxial transmission line.

The output of the intermediate frequency amplifier 15, where there is a difference in the levels of signal inputs at poles 10 and 11, is an amplitude modulated signal, the modulation frequency being the switching repetition rate of the switch 14. An envelope detector 16 is used in the conventional manner to remove this substantially square wave modulation from the intermediate frequency envelope, and to pass it through to an amplifier 17.

In order to compare the phase and amplitude of the signals supplied by the envelope detector 16 to the amplifier 17, the output of the envelope detector 16 is employed as a first input to a first phase detector 18. A second input to the first phase detector 18 must be a reference signal indexed to the phase of the switching cycle of the switch 14, so that the same signal generated by pulse source means yet to be explained for operating the switch driver 13, and therefore the switch 14, is supplied on a lead 36 to that second input of the first phase detector 18, a device employed in a conventional manner to detect the relative amplitudes of input signals and to a evaluate which input signal is the greater.

As in conventional practice, the output of the first phase sensitive detector 18 is subjected to the action of a low pass filter or integrator circuit 19, may be amplified by a d.c. amplifier (not shown), and is finally displayed, for instance, by a direct current meter 20. The adjustment of the driver 13 and the phase of the reference signal driving it relative to the operation of the switch 14 is such that, when the signal at pole 10 is equal in amplitude to the reference noise signal from the source 12, the meter needle points to zero, for instance, on the scale of the meter 20. When the signal at pole 10 differs in amplitude with respect to the reference noise signal from the source 12, the needle is directed proportionally to one side of the zero indication of the meter 20, for example.

The apparatus thus far described will be recognised by those skilled in the art as generally incorporating features employed in prior art practice. In operation, high frequency radiometric signals collected by the antenna 1 are subjected to frequency conversion in the mixer 5 and pass through the switch 14; the switch 14 also cyclically, but alternately, passes signals from the reference noise signal source 12 to the envelope detector 16. The output of the envelope detector 16 is supplied to the first phase detector 18, which is the true radiometer signal phase detector, and which produces a unipolar direct current signal whose amplitude is proportional to the difference of the temperature of the effective source viewed by the antenna 1 and the constant reference temperature characterising the reference noise signal generator 12, as in standard radiometer comparison receivers of certain types referred to in U.S. Patent Specification US—A—3,628,151. As will be seen, the apparatus thus far described is a passive radiometer apparatus and may be operated in its passive mode when control switches 21 and 22 are in the non-conducting situation as shown in Figure 1.

In the active mode of the apparatus, the switch 21 is moved to contact the switch pole 23 for providing the cyclic transmission of white or broad band noise signals or waves F from the antenna 1 for illuminating any selected target of interest. The apparatus involved in supplying incoherent noise signals over a band including the total pass band or pass bands of the radiometer receiver may be described as beginning with a voltage controlled oscillator or pulse source 24, which conventional device generates a substantially square wave A of frequency arbitrarily labelled $2f_o$ for reasons yet to be explained. Wave A is fed to a differentiator 25, a commonly used circuit for producing positive and negative spike pulses corresponding to the vertical excusions of each input square wave cycle in the well known manner. The wave B, composed only of the positive voltage spikes or trigger pulses, is fed to a conventional bistable multivibrator 26 for production of a positive reference square wave D of frequency $f_o$ at reference phase zero degrees, and therefore represented by the symbol $f_o/\underline{0°}$. It will be understood that wave D is a reference wave fed to the switch driver 13 and to the first phase detector 18 whether the system is in its active or passive mode.

The wave D output of the bistable multivibrator 26 is also fed to a conventional modulator 27 which, when the switch 21 is conducting, switches or pulse modulates a conventional noise source 28 on and off. The output of the noise source 28 is controlled according to the setting of a dial 29a of calibrated attenuator 29; accordingly, a calibrated part of the output of the noise source 28 is coupled to a third port 30 of the circulator 3 for cyclic radiation by the antenna 1.

For supply of a voltage for establishing frequency control of the pulse source 24 during the active mode of the system, a version of the output of the amplifier 17 is connected via a lead 31 to a limiter 32, forming the limited wave I for application as a first input to a second phase detector 33. The second input to the second phase detector 33 is a reference signal generated under the control of the pulse source 24 and the differentiator 25. The negative going spike pulse output C of the differentiator 25 is selected for the control of a bistable multivibrator 34 for forming a reference square wave train E which may be labelled $f_o/\underline{90°}$, since it is a quadrature wave needed as a reference signal for proper operation of the phase detector 33.

The output of the second phase detector 33 becomes a unipolar direct voltage, after the signal is subjected to the action of the low pass filter or integrator circuit 37. It may be amplified by a direct current amplifier (not shown), if required, and is then, in the active mode of the system, passed through the switch 22 in the conducting position of the latter to a signal algebraic summer or adder 35 for supply to the frequency controlling terminal of voltage controlled oscillator or pulse source 24.

In operation of the apparatus in the active noise illumination mode, switch blade 21 is placed in contact with the terminal 23, so that frequency modulated noise signals F having a band width covering the entire pass band of the radiometer receiver are transmitted from the antenna 1 for one half of the radiometer switching cycle as determined by the bistable multivibrator 26. The illumination or noise source 28 is then switched off for the remaining one half of the cycle while the receiver system is switched on a accept and to process the received radiometer signals. The output signal from the radiometer integrator 19 is displayed on the electrical meter 20 which is calibrated in units of temperature.

When operated in the active or noise illuminating mode, the switch 22 is also closed to contact the terminal 22a, an action which activates the phase locking loop including the voltage controlled pulse source 24, the multivibrator 34, the limiter 32, the second phase detector 33, and the integrator 37, all of which elements cooperate, as will be seen, to hold operation of the reference voltage-controlled pulse source 24 at the proper frequency $2f_0$. The desired frequency $2f_0$ is that at which the radiometer receiver system is enabled to receive and processes all of the energy in wave G reflected by the illuminated target.

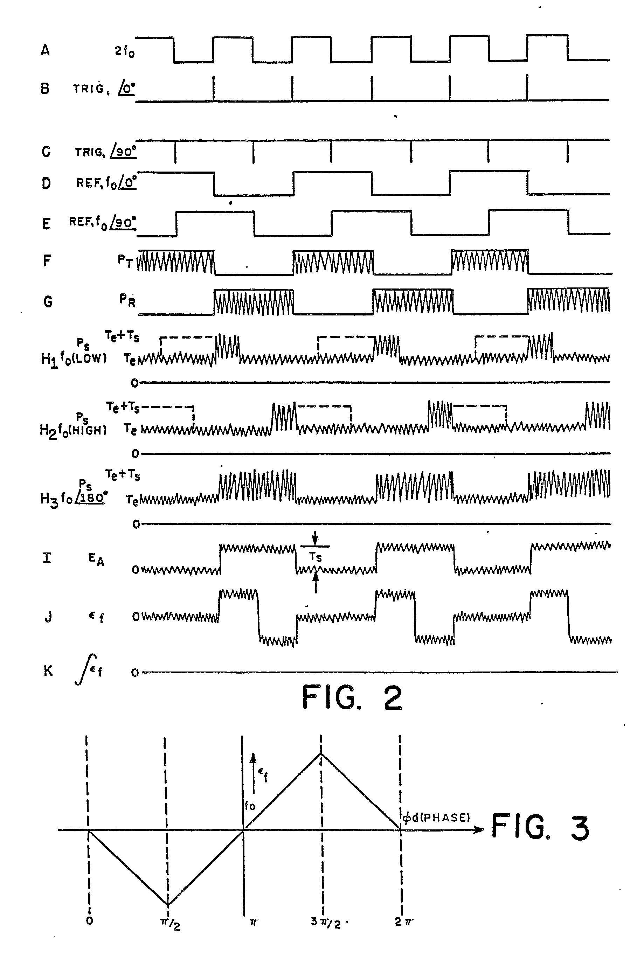

Operation of the radiometric receiver system of Figure 1 will be further understood by reference to wave form graphs A to K of Figure 2. Quadrature control signals are generated by the voltage controlled variable frequency means formed by the components 24, 25, 26 and 34 to achieve the desired control of the transmit and receive operations of the radiometric system and to provide for automatic control of the switching rate of the switch 14. The output signal A of the voltage controlled pulse source 24, which is of frequency $2f_0$, is fed to the differentiator 25 for the control of the quadrature multivibrators 26 and 34. The positive differentiator output in the form of positive trigger pulses B triggers the bistable multivibrator 26, whereas the negative output (wave C) of the differentiator 25 triggers the loop control multivibrator 34. The consequential output signals from the two bistable multivibrators 26 and 34 are the respective quadrature waves D and E. Waves D and E are characterised by a frequency $f_0$ which is one half the frequency of the output of the pulse source 24.

The voltage controlled oscillator or pulse source 24 may in practice be operated over an extended frequency range depending upon the desired system operating distance such as, for example, 20 kHz to 200 kHz. Accordingly, the corresponding signals D and E generated by the respective bistable multivibrators 26 and 34 would each range from 10 kHz to 100 kHz, for example.

The noise source 28 generating the noise illumination signal may be a conventional voltage controllable semiconductor noise generator or, alternatively, a backward wave oscillator of known type. Suitable semiconductor noise sources include varactor tuned avalanche transit time or Gunn diode oscillators adapted to yield noise power at levels between 20 and 100 milliwatts. Either kind of noise source is readily frequency modulated by the conventional random noise modulator 27 in such a manner that the entire high frequency output of the source 28 is randomly swept over the entire pass band of the radiometric receiver system.

The noise transmit-receive cycle is controlled by the square wave D that drives modulator 27; when the noise modulator 27 is switch on, the noise source 28 randomly changes frequency and when the noise modulator 27 is switched off, there is no transmission of energy from the antenna 1. The output signal of the noise source 28 is preferably fed through the calibrated attenuator 29 and then to the port 30 of the circulator 3. The attenuator 29 is provided to permit the transmitted wave F to be regulated in amplitude so that the return signal G falls within the dynamic range of the radiometric receiver system. Accurate measurement of the power of the received signal G is made, since the operator has knowledge of the power level of the noise source 28, of the setting of the calibrated attenuator 29, and of the temperature indication of the meter 20 after the switching rate of the radiometric system has been phase locked.

A significant feature of the radiometric system according to the present invention in its low-power active mode lies in the use of the circulator 3, in that the circulator isolation alone is found adequate to protect the mixer 5 and the intermediate frequency preamplifier 8 and to preserve the desirable low noise figure of the radiometric receiver system. The circulator 3 connects the antenna 1 to the noise source 28 and serves to isolate the transmitted energy from the mixer 5 and the received wave G from the noise source 28; the circulator 3 normally operates with clockwise energy propagation as indicated by the arcuate arrows around it to couple the noise energy wave F out of the antenna 1 and to couple the received wave G into the mixer 5. During operation in the active mode, approximately 0.1 to 1.0 per cent of the power from the noise source may leak, for example, through the circulator 3 in a sense in reverse of that indicated by the arcuate arrows and may flow into the mixer 5. However, the total level of the undesired power will be insufficient to degrade or damage the operating diodes of the mixer 5.

As seen in Figure 2, the signal transmitted to the selected target has the appearance of the square wave switched noise signal F, while the reflected wave G has a similar appearance but is delayed by a time equal to $2R/c$ (twice the target distance R is divided by the velocity $c$ of propagation in space of wave F). If, at a given range, the square wave switching frequency $f_0$ of the noise source 28 is selected so that the received signal, as shown in wave G, is delayed exactly one half the switching rate, then the received wave G that can be detected by the radiometric receiver will have maximum energy and system performance will be optimum. Accordingly, the phase locking loop controlling the pulse source 24 is advantageously used to control the switching rate of the switch 14 so as automatically to adjust the radiometric system for optimum performance over a variety of target distances.

During the half cycle of the radiometric receiver system when the noise source 28 is not turned on, the received signal G is fed into the mixer 5, which mixer may be a conventional low noise, wide band, transmission line balanced mixer operating, for example, at a centre frequency of 35 GHz. As noted previously, the radiometric receiver system accents and processes both the upper and lower high-frequency side bands on each side of the mixer central frequency. The local oscillator 7 may be, for example, a semiconductor oscillator such as a Gunn diode oscillator tuned to the same frequency frequency of 35 GHz. The intermediate frequency preamplifier 8 and the intermediate frequency amplifier 15 would, in such a circumstance, have pass bands of some 50 to 500 mHz. Thus, the cut off frequencies of the radiometric receiver system may be a 34.5 and 35.5 GHz.

The intermediate frequency signal derived in the mixer 5 may be amplified by the intermediate frequency preamplifier 8 which is a low noise, relatively low gain, intermediate frequency preamplifier used in the system to aid in maintaining a low overall receiver noise figure. The amplified signal appearing as wave H from the switch 14 of Figure 2 is connected to the intermediate frequency amplifier 15. The switch 14, which may be a coaxial diode siwtch, is operated in synchronism with the switching of the noise 28, as noted above.

The switch 14 has two basic functions in the noise illumination or active mode of the radiometric system. First, the switch 14 breaks the intermediate frequency signal transmission line between the intermediate frequency amplifiers 8 and 15 during the half cycle that the target is being illuminated by energy from the noise source 28. With this connection broken, leakage energy and internal reflections in the antenna transmission line system are thus unable to saturate the intermediate frequency amplifier 15 and the receiver elements which follow it. Secondly, the switch 14 then connects the output of the reference noise signal source 12 to the amplifier 15, permitting operator balancing of the differential intermediate frequency signal to zero by observation of the meter 20. That is, the signal from the reference noise signal source 12 is then adjusted to be equal to the equivalent noise temperature $T_e$ at the input terminals of the intermediate frequency amplifier 15 during the half cycle of operation of the system in which wave G is being received.

The consequential signal H appearing at the input to the intermediate frequency amplifier 15 is harmonically related to the microwave signal F and depends in its nature upon the system switching rate and the distance to the reflecting target. For example, the three wave forms $H_1$, $H_2$, and $H_3$ in Figure 2 illustrate the effects of the system switching rate when it varies with respect to the optimum switching frequency. For example, wave $H_1$ illustrates the input to the amplifier 15 when the system switching rate is too low with respect to the distance to the target. Similarly, wave form $H_2$ represents the opposite situation which obtains when the system switching rate is too high with respect to the optimum rate. Finally, the wave form $H_3$ represents the optimum condition in that the receiver active time coincides exactly with the time of arrival of the reflected wave G and a maximum amount of the reflected signal is therefore gated into the radiometric receiver system. In wave $H_1$ of Figure 2, the reflected target is at a closer than optimum range so that the signal G received by the antenna 1 begins to arrive while the noise source 28 is still on; consequently, only the last part of the received wave G is available for measurement by the meter 20. For this condition, the system switching rate is evidently too low and would have to be increased in order for the meter 20 to indicate an accurate measurement in terms of the entire signal G reflected by the selected target. In the instance of wave $H_2$, the opposite case is illustrated; wave $H_2$ represents a target at a greater distance than optimum so that only the first part of the received signal G can be measured by the meter 20. The system switching rate must be reduced in order for the entire wave G to be accepted and accurately measured.

The optimum switching frequency must have a time period that is twice the time delay characterising the selected target (i.e. $T_o=4R/c$). In typical operation, it is desired to make radiometric measurements on targets at distances, for example, between 762 m (2,500 feet) and 7620 m (25,000 feet) and, as noted previously, the system switching rate of the radiometric system must then be varied over the frequency range from 100 kHz to 10 kHz, respectively. The shortest operational distance sets the requirement for the highest switching frequency and thus also for the largest value of the band width of the circuits following the intermediate frequency amplifier 15. Thus, maximum band width for the circuits following the intermediate frequency amplifier 15 will be on the order of 1 MHz.

The envelope detector 16 following the intermediate frequency amplifier 15 removes the switched modulation envelope, operating as it normally would in conventional radiometer apparatus. The detector diode employed in the envelope detector 16 is operated at its square law region, thus assuring that the radiometer receiver response is linear. The amplifier 17 raises the modulation signal input to a level suitable for operation of the first phase detector 18. The output of the phase detector 18, after processing by the integrator 19, is a direct voltage proportional in amplitude to the difference in signal level that exists between the input terminals 10 and 11 of the switch 14. When the reference noise signal

**0 069 812**

source 12 is adjusted as previously described to be equal to the receiver noise at the switch terminals, the amplitude of the signal supplied to the meter 20 is accurately proportional to the amplitude of the received signal G.

In the active or noise illumination mode of radiometer operation, it is seen that improved measurement accuracy is provided by employing quadrature phase direction of the signal derived by the envelope detector 16 and by using the aforementioned phase locking loop for controlling the frequency of the pulse source 24 and thus for controlling the radiometer system switching rate. For the latter purpose, a version of the envelope detected signal is supplied by lead 31 to the conventional amplitude limiter 32, thus providing the signal I of Figure 2 from which amplitude variations originally present on the received signal are removed. Thus, when signal I is supplied to the second phase detector 33 its output (wave J) depends only on the phase relationship between the detected envelope of wave I and the reference input signal $f_o/90°$, which latter is wave E supplied by the bistable multivibrator 34. The output of the limiter 32 is wave I of Figure 2 for the optimum frequency condition; the output of the quadrature or second phase detector 33 is wave J of Figure 2 for the optimum condition. The quadrature output J is proportional to cos θ, where θ is the phase difference between wave I and the reference E in the phase locked condition of the loop controlling the frequency $2f_o$ of the pulse source 24. The angle θ is substantially 90° and the output wave K after wave J is processed by the integrator 34 is then zero, as indicated by wave K in Figure 2.

It is also possible to obtain an indication of the presence or absence of the phase locked condition of pulse source 24. Such is accomplished by a third phase detector 40 having two inputs, one for receiving wave D on lead 36, and the other for receiving the limited wave I from the amplitude limiter 32. The output of the third phase detector 40 is supplied to an integrator or low pass filter 41 which generates a polarity reversing direct voltage output signal for supply to a meter 42 arranged to show the locked or unlocked status of the phase locking loop. It is observed that the third phase detector 40 operates essentially in parallel with the second phase detector 33. Thus, the first and third respective phase detectors 18 and 40 use the same reference input wave D which is $f_o/0°$ in the locked condition, the angle θ of the output generated by the third phase detector 40 will be zero degrees. Therefore, cos θ is substantially unity and the needle of the meter 42 will be positioned to give a locked or full scale indication L substantially in the location shown in Figure 1; on the other hand, when the loop controlling pulse source 24 is not locked, the meter 42 will generally indicate a low reading U and will noticeably drift. This is contrast to the situation for the phase locked condition in which the meter 42 provides a full scale and steady deflection.

Actual phase lock of the phase locking loop may be achieved by use of a sweep source 43 (Figure 1) adapted to apply an increasing ramp voltage to one input of the algebraic adder 35. Alternatively, means may be supplied for applying a step function voltage to an input (not shown) of the integrator 37. In either event, an increasing sweep voltage will be applied to the frequency determining terminal of the pulse oscillator or source 24 so that it is swept from its lowest frequency (the longest target distance condition) to increase its output frequency until reaching the capture condition of the phase locking loop that controls the pulse source 24. As seen in Figure 3, which illustrates the composite locking characteristic of the loop, the loop will be locked for a frequency $f_o$ when the phase difference $θ_d$ between wave forms F and G is equal to π. The pulse source frequency is $2f_o$ under this condition. The capture range for lock-in extends from $θ_d=π/2$ to $θ_d=3π/2$. For the fundamental locking frequency of $f_o$, the value π/2 corresponds to $f_o/2$ and the value 3π/2 corresponds to $3f_o/2$; i.e., the locking band width will be $f_o$ centred at $f_o$. The signal is swept always from its lowest value because other and undesired lock-in conditions exist at odd harmonics ($3f_o$, $5f_o$, etc.) and are avoided when the desired first lock-in condition is always approached from the low frequency direction.

A further advantage of the active mode radiometer instrumentation lies in the fact that the phase locking operation of the loop controlling the pulse source 24 may be used to afford a measure of distance to the selected target. Since the locked frequency of the pulse source 24 is proportional to c/4R, a frequency discriminator 45 may be coupled to the pulse source 24 for distance measurement purposes. Since the output of the frequency discriminator 45 is a unidirectional voltage inversely proportional to the distance to the selected target, this discriminator voltage may be applied to a direct current meter 46 whose face is calibrated in any desired distance units.

It is thus seen that the radiometric system of the present invention may be operated either in passive or active modes. It is operated in the passive mode by placing the switches 21 and 22 so that they open the contacts of both switches. The reference noise signal source 12 may then be set to a desired operating repetition frequency by adjusting the undirectional voltage on its frequency-determining terminal by any conventional means. During such passive operation, the noise source 28 is not generating output signals and the radiometric system functions generally in the same manner as do prior art comparison radiometers, the comparison switching being accomplished in the intermediate frequency channel of the receiver. The output temperature meter 20 displays the temperature corresponding to the signal received from the target or other object being examined. The output meter 20 may be calibrated from zero degrees Kelvin to a temperature of several thousand degrees Kelvin.

In its active mode of operation, the radiometric system cyclically supplies augmentation broad band or white noise pulses of energy directed toward the selected target, where such incoherent noise signals produced enhanced target reflections for improving the measured radiometric temperature contrast between the target and space. Further, the maximum distance at which a target may be detected is increased. The broad band illumination noise signals cyclically transmitted and reflected from the target permit comparison measurement under control of a phase locking loop so that optimum comparison is achieved over a variety of target distances. Thus, inherent limitations of prior art comparison radiometers are overcome, including those caused by limited temperature contrast of normal targets with respect to their spatial backgrounds.

**Claims**

1. A radiometric system comprising cyclic signal generating circuit means (24, 25, 26, 34) operable to supply a first cyclic signal, first noise source means (28) operable in response to the first cyclic signal to produce a cyclic noise signal which is to be transmitted, receiver means (5, 7, 8) operable to receive a reflection signal representing reflections of the transmitted cyclic noise signal from a reflecting element, signal envelope detector means (16) for providing output signals representative of received signal envelopes, and first phase detector means (18) responsive to the output signal of the envelope detector means in producing a signal having an amplitude related to the amplitude of the received cyclic noise signal, characterised in that the cyclic signal generating circuit means (24, 25, 26, 34) are also operable to supply a second cyclic signal in substantially phase quadrature with the first cyclic signal, in that the first phase detector means (18) is also responsive to the first cyclic signal, in that the system comprises a second phase detector means (33) which is responsive to the second cyclic signal and to the output signal of the envelope detector means (16) for producing a voltage signal acting as a frequency control signal, and in that the system further comprises means (37, 35) for applying the frequency control signal to the cyclic signal generating circuit means (24, 25, 26, 34) for the control of the operating frequency of the cyclic signal generating circuit means (24, 25, 26, 34).

2. A system according to claim 1, characterised in that it further includes directive antenna means (1), and signal isolator means (3) connecting in mutually isolated signal propagation relation the first noise source means (28) and the receiver means to the directive antenna means.

3. A system according to claim 1 or 2, characterised in that it further includes a second noise source means as reference noise signal source means (12), and switch means (14) responsive to the first cyclic signal for cyclically and alternately connecting the signal envelope detector means (16) to the receiver means and to the reference noise signal source means (12).

4. A system according to any of the preceding claims, characterised in that it further includes first integrator circuit means (19) responsive to the first phase detector means (18), and first display means (20) responsive to the output signal of the first integrator circuit means (19).

5. A system according to any of the preceding claims, characterised in that it further includes amplitude limiter means (32) interposed between the envelope detector means (16) and the second phase detector means (33).

6. A system according to any of the preceding claims, characterised in that it further includes a second integrator means (37) interposed between the second phase detector means (33) and the cyclic signal generating circuit means (24, 25, 26, 34).

7. A system according to claim 5, characterised in that it further includes third phase detector means (40) responsive to the first cyclic signal and to the output signal of the amplitude limiter means (32), third integrator circuit means (41) responsive to the output signal of the third phase detector means (40) and second display means (42) responsive to the output signal of the third integrator circuit means (41).

8. A system according to any of the preceding claims, characterised in that it further includes frequency discriminator means (45) coupled to the cyclic signal generating circuit means (24, 25, 26, 34), and third display means (46) responsive to the output signal of the frequency discriminator means (45).

9. A system according to any of claims 1 to 7, characterised in that it further includes loop means responsive to the output signal of the envelope detector means (16) for controlling in a phase locking loop the frequency of the cyclic signal generating circuit means (24, 25, 26, 34).

**Patentansprüche**

1. Radiometrisches System mit ein zyklisches Signal erzeugenden Schaltungseinrichtungen (24, 25, 26, 34) zur Lieferung eines ersten zyklischen Signals, mit ersten Rauschquelleneinrichtungen (28), die in Abhängigkeit von dem ersten zyklischen Signal betätigbar sind, um ein zyklisches Rauschsignal zu erzeugen, das ausgesandt wird, mit Empfängereinrichtungen (5, 7, 8) zum Empfang eines Reflexionssignals, des Reflexionen des ausgesandten zyklischen Rauschsignals von einem reflektierenden Element darstellt, mit Signalhüllkurven-Detektoreinrichtungen (16) zur Lieferung von Ausgangssignalen, die die Hüllkurven von empfangenen Signalen darstellen, und mit ersten Phasen-Detektoreinrichtungen (18), die auf das Ausgangssignal der Hüllkurven-Detektoreinrichtungen ansprechen und ein Signal erzeugen, das eine Amplitude aufweist, die auf die Amplitude des empfangenen zyklischen Rauschsignals bezogen ist, dadurch gekennzeichnet, daß die ein zyklisches Signal erzeugenden Schaltungseinrichtungen (24, 25, 26, 34) weiterhin ein zweites zyklishes Signal erzeugen, das zu dem ersten zyklischen Signal im wesentlichen in Phasenquadratur steht, daß die ersten Phasen-Detektoreinrichtungen (18) weiterhin auf das erste zyklische Signal ansprechen, daß das System eine zweite Phasen-Detektoreinrichtung (33) aufweist, die auf das zweite zyklische Signal und auf das Ausgangssignal der Hüllkurven-Detektoreinrichtungen (16) anspricht, um ein Spannungssignal zu erzeugen, das als Frequenzsteuersignal wirkt, und daß das System weiterhin Einrichtungen (37, 35) zur Zuführung des Frequenzsteuersignals an die das zyklische Signal erzeugenden Schaltungseinrichtungen (24, 25, 26, 34) zur Steuerung der Betriebsfrequenz dieser das zyklische Signal erzeugenden Schaltungseinrichtungen (24, 25, 26, 34) aufweist.

2. System nach Anspruch 1, dadurch gekennzeichnet, daß es weiterhin Richtantenneneinrichtungen (1) und Signalisolatoreinrichtungen (3) einschließt, die die ersten Rauschquelleneinrichtungen (28) und die Empfängereinrichtungen in gegenseitiger isolierter Signalausbreitungsbeziehung mit den Richtantenneneinrichtungen verbinden.

3. System nach Anspruch 1 oder 2, dadurch gekennzeichnet, daß es weiterhin zweite Rauschquelleneinrichtungen als Bezugsrauschsignalquelleneinrichtungen (12) sowie Schaltereinrichtungen (14) einschließt, die auf das erste zyklische Signal ansprechen, um die Signalhüllkurven-Detektoreinrichtungen (16) zyklisch und abwechselnd mit den Empfängereinrichtungen und mit den Bezugsrauschsignalquelleneinrichtungen (12) zu verbinden.

4. System nach einem der vorhergehenden Ansprüche, dadurch gekennzeichnet, daß es weiterhin erste Intergratorschaltungseinrichtungen (19), die auf die ersten Phasen-Detektoreinrichtungen (18) ansprechen, und erste Anzeigeeinrichtungen (20) einschließt, die auf das Ausgangssignal der ersten Integratorschaltungseinrichtungen (19) ansprechen.

5. System nach einem der vorhergehenden Ansprüche, dadurch gekennzeichnet, daß es weiterhin Hüllkurven-Begrenzereinrichtungen (32) einschließt, die zwischen den Hüllkurven-Detektoreinrichtungen (16) und den zweiten Phasen-Detektoreinrichtungen (33) eingeschaltet sind.

6. System nach einem der vorhergehenden Ansprüche, dadurch gekennzeichnet, daß es weiterhin zweite Integratoreinrichtungen (37) einschließt, die zwischen den zweiten Phasen-Detektoreinrichtungen (33) und den ein zyklisches Signal erzeugenden Schaltungseinrichtungen (24, 25, 26, 34) eingefügt sind.

7. System nach Anspruch 5, dadurch gekennzeichnet, daß es weiterhin dritte Phasen-Detektoreinrichtungen (40), die auf das erste zyklische Signal und auf des Ausgangssignal der Amplituden-Begrenzereinrichtungen (32) ansprechen, dritte Integratorschaltungseinrichtungen (41), die auf das Ausgangssignal der dritten Phasen-Detektoreinrichtungen (40) ansprechen, und zweite Anzeigeeinrichtungen (42) einschließt, die auf das Ausgangssignal der dritten Integratorschaltungseinrichtungen (41) ansprechen.

8. System nach einem der vorhergehenden Ansprüche, dadurch gekennzeichnet, daß es weiterhin Frequenzdiskriminatoreinrichtungen (45), die mit den das zyklische Signal erzeugenden Schaltungseinrichtungen (24, 25, 26, 34) verbunden sind, und dritte Anzeigeeinrichtungen (46) einschließt, die auf das Ausgangssignal der Frequenzdiskriminatoreinrichtungen (45) ansprechen.

9. System nach einem der Ansprüche 1 bis 7, dadurch gekennzeichnet, daß es weiterhin Phasenschleifeneinrichtungen einschließt, die auf das Ausgangssignal der Hüllkurven-Detektoreinrichtungen (16) ansprechen, um die Frequenz der das zyklische Signal erzeugenden Schaltungseinrichtungen (24, 25, 26, 34) in einer phasenstarren Schleife zu steuern.

**Revendications**

1. Système radiométrique comprenant un circuit générateur de signaux cycliques (24, 25, 26, 34) destiné à transmettre un premier signal cyclique, une première source de bruit (28) commandée par le premier signal cyclique et destinée à former en conséquence un signal cyclique. de bruit qui doit être transmis, un récepteur (5, 7, 8) destiné à recevoir un signal réfléchi représentant les réflexions par un élément réflecteur du. signal émis de bruit cyclique, un dètecteur (16) d'enveloppe du signal destiné à former des signaux de sortie représentatifs des enveloppes des signaux reçus, et un premier détecteur de déphasage (18) commandé par le signal de sortie du détecteur d'enveloppe et destiné à former un signal ayant une amplitude reliée à l'amplitude du signal de bruit cyclique reçu, caractérisé en ce que le circuit générateur de signaux cycliques (24, 25, 26, 34) est aussi destiné à transmettre un second signal cyclique pratiquement en quadrature avec le premier signal cyclique, en ce que le premier détecteur de déphassage (18) est aussi commandé par le premier signal cyclique, en ce que le système comprend un second détecteur de déphasage (33) commandé par le second signal cyclique et par le signal de sortie du détecteur d'enveloppe (16) et destiné à former un signal sous forme d'une tension jouant le rôle d'un signal de réglage de fréquence, et en ce que le système comporté en outre un dispositif (37, 35) destiné à appliquer le signal de réglage de fréquence au circuit générateur de signaux cycliques (24, 25, 26, 34) afin qu'il règle la fréquence de travail du circuit générateur de signaux cycliques (24, 25, 26, 34). ·

2. Système selon la revendication 1, caractérisé en ce qu'il comprend en outre une antenne directive (1) et un dispositif isolateur de signaux (3) assurant la connexion, avec isolement mutuel de la propagation des signaux, de la première source de bruit (28) et du dispositif récepteur à l'antenne directive.

3. Système selon l'une des revendications 1 et 2, caractérisé en ce qu'il comprend en outre une seconde source de bruit constituant une source de signaux de bruit de référence (12), et un dispositif de commutation (14) commandé par le premier signal cyclique et destiné à connecter cycliquement et en alternance le détecteur d'enveloppe (16) au dispositif récepteur et à la source du signal de bruit de référence (12).

4. Système selon l'une quelconque des revendications précédentes, caractérisé en ce qu'il comprend en outre un premier circuit intégrateur (19) commandé par le premier détecteur de déphasage (18), et un premier dispositif d'affichage (20) commandé par le signal de sortie du premier circuit intégrateur (19).

5. Système selon l'une quelconque des revendications précédentes, caractérisé en ce qu'il comprend en outre un circuit limiteur d'amplitude (32) monté entre le détecteur d'enveloppe (16) et le second détecteur de déphasage (33).

6. Système selon l'une quelconque des revendications précédentes, caractérisé en ce qu'il comporte en outre un second intégrateur (37) monté entre le signal détecteur de déphasage (33) et le circuit générateur d'un signal cyclique (24, 25, 26, 34).

7. Système selon la revendication 5, caractérisé en ce qu'il comprend en outre un troisième détecteur de déphasage (40) commandé par le premier signal cyclique et par le signal de sortie du circuit limiteur d'amplitude (32), un troisième circuit intégrateur (41) commandé par le signal de sortie du troisième détecteur de déphasage (40) et un second dispositif d'affichage (42) commandé par le signal de sortie du troisième circuit intégrateur (41).

8. Système selon l'une quelconque des revendications précédentes, caractérisé en ce qu'il comporte en outre un discriminateur de fréquence (45) couplé au circuit générateur d'un signal cyclique (24, 25, 26, 34), et un troisième dispositif d'affichage (46) commandé par le signal de sortie du discriminateur de fréquence (45).

9. Système selon l'une quelconque des revendications 1 à 7, caractérisé en ce qu'il comporte en outre une boucle commandée par le signal de sortie du détecteur d'enveloppe (16) et destinée à régler, dans une boucle à verrouillage de phase, la fréquence du circuit générateur d'un signal cyclique (24, 25, 26, 34).

FIG. I

FIG. 2

FIG. 3